# FASCICULE DE BREVET EUROPEEN

(11) **EP 3 514 975 B1**
(45) Date de publication et mention de la délivrance du brevet: **19.08.2020**
(21) Numéro de dépôt: 18209211.4
(22) Date de dépôt: 01.12.2015
(51) Int. Cl.: H04B 3/30, H04L 25/08, H04L 25/02, H04B 3/54

(54) **MESURE ET DIAGNOSTIC DE BRUIT EXTERNE POUR SYSTÈME DE TRANSMISSION SUR LIGNÉ ÉLECTRIQUE BIFILAIRE**
MESSUNG UND DIAGNOSE DES AUSSENGERÄUSCHS FÜR ÜBERTRAGUNGSSYSTEM ÜBER ZWEIDRAHTIGE STROMLEITUNG
EXTERNAL NOISE DIAGNOSIS AND MEASUREMENT FOR TRANSMISSION SYSTEM ON TWO-WIRE POWER LINE

(30) Priorité: 02.12.2014 FR 1461820
(43) Date de publication de la demande: 24.07.2019
(62) Demande divisionnaire de: 15817459.9
(73) Titulaire: ORANGE, 75015 Paris (FR)
(72) Inventeur: TARAFI, Rabah, 92326 Chatillon Cedex (FR); MOULIN, Fabienne, 92326 Chatillon Cedex (FR); CARIO, Alain, 92326 Chatillon Cedex (FR)

(56) Documents cités:
- WO-A1-01/50623
- US-A1- 2005 053 229
- US-A1- 2011 206 104

## Description

### 1. Domaine de l'invention

La demande d'invention se situe dans le domaine de l'annulation des bruits électromagnétiques pour les systèmes de transmission par une paire de fils de cuivre (téléphoniques ou électriques), dits bifilaires, et plus particulièrement les bruits couplés en mode commun, c'est-à-dire impactant la paire de fil prise dans son ensemble, et non les bruits couplés en mode différentiels, c'est-à-dire impactant un fil de la paire par rapport à l'autre.

### 2. Etat de la technique antérieure

Les systèmes de transmission bifilaires, par exemple les systèmes DSL (Digital Subscriber Line) ou PLT (Power Line Transmission), sont soumis à des perturbations électromagnétiques, qui dégradent la qualité de la transmission et donc celle des services (débits anormalement faibles, déconnexions intempestives, etc.).

Ces bruits, dont l'origine est une source externe à la paire de fils (équipements électrodomestiques, moteurs d'ascenseur, passages de train sur ligne électrifiée, alimentations défectueuses, etc.), se couplent en mode commun, c'est-à-dire entre les fils et la terre, se convertissent en un mode différentiel, c'est-à-dire entre chaque fil, et constituent une tension parasite superposée au signal utile également transmis en différentiel entre les deux fils.

La demande de brevet publiée US 2011/0206104 A1 enseigne une technique d'annulation du bruit mise en œuvre dans un modem, basée sur l'utilisation de deux paires de fils connectées au même modem, et sur l'hypothèse que les deux paires sont soumises aux mêmes perturbations électromagnétiques. L'une des paires permet donc la mesure des bruits pour les soustraire dans le domaine temporel au signal reçu par l'autre paire, constitué du signal utile et du bruit.

Cette méthode présente au moins deux inconvénients majeurs. Elle nécessite l'utilisation de deux paires connectées au modem et ne peut donc pas être utilisée lorsqu'une seule paire arrive chez le client du service de télécommunication où se trouve le modem, ce qui est majoritairement le cas.

De plus l'hypothèse selon laquelle le bruit couplé sur les deux paires est identique est une approximation car chaque paire a sa propre conversion entre mode commun et mode différentiel. Le bruit soustrait à partir de la mesure sur une paire ne sera donc pas identique à celui présent sur la paire de transmission et superposé au signal utile.

Les demandes de brevet publiées US 2005/0053229 A1 et WO 01/50623 A1 présentent des méthodes d'annulation ou de réduction du bruit de mode commun mais ces méthodes ne traitent pas le bruit de mode différentiel.

Un des buts de l'invention est de remédier à ces inconvénients de l'état de la technique.

### 3. Exposé de l'invention

L'invention vient améliorer la situation à l'aide d'un procédé d'annulation d'un bruit présent dans un signal de données reçu sur une ligne bifilaire électrique, mis en œuvre par un dispositif émetteur-récepteur comprenant :
- un premier transformateur, dit circuit de mode différentiel, comprenant un côté primaire et un côté secondaire, le côté primaire étant connecté par deux fils à la ligne bifilaire ;
- un deuxième transformateur, dit circuit de mode commun, comprenant un côté primaire et un côté secondaire, le côté primaire étant connecté par un fil au côté primaire du circuit de mode différentiel, et à une masse par un autre fil ;
le procédé comprenant les étapes suivantes lors d'une **phase de réglage** :
- obtention d'une première valeur de tension sur la ligne bifilaire, dite tension de mode différentiel ;
- obtention d'une deuxième valeur de tension correspondant à une tension au niveau des deux fils du côté secondaire du circuit de mode commun, dite tension image du mode commun, résultant de ladite tension de mode différentiel ;
- calcul du rapport entre la deuxième valeur et la première valeur, dit rapport de conversion du bruit ;
et le procédé comprenant les étapes suivantes lors d'une **phase d'annulation**, subséquente à la phase de réglage :
- réception du signal de données en provenance de la ligne bifilaire ;
- simultanément à la réception, obtention d'une troisième valeur de tension correspondant à la tension au niveau des deux fils du côté secondaire du circuit de mode commun ;
- annulation du bruit dans le signal de données, par soustraction d'une estimation du bruit, l'estimation étant calculée par division de la troisième valeur par ledit rapport de conversion.

La solution proposée par le procédé selon l'invention permet l'annulation du bruit à partir d'une seule paire de fils connectée au modem. Elle prend en compte le bruit réellement couplé sur la ligne bifilaire. Ce procédé se déroule en deux phases : une phase de réglage, durant laquelle aucune donnée dite utile n'est transmise sur la ligne bifilaire, et une phase d'annulation pendant laquelle la ligne bifilaire transmet des données utiles mais bruitées.

Durant la phase de réglage, la conversion mode commun / mode différentiel est évaluée, sur la base d'un bruit présent sur la ligne bifilaire.

Durant la phase d'annulation, le bruit de mode différentiel est calculé à partir de la conversion mode commun / mode différentiel estimée lors de la phase de réglage, et à partir d'une mesure de mode commun effectuée dynamiquement, c'est-à-dire pendant la transmission du signal utile bruité.

Selon un aspect de l'invention, les étapes d'obtention de la phase de réglage sont précédées des étapes suivantes:
- génération d'un signal de réglage connu, par le dispositif émetteur-récepteur ;
- émission du signal de réglage connu vers le circuit de mode différentiel ou vers le circuit de mode commun.

Lorsque le bruit ambiant présent dans la ligne bifilaire, c'est-à-dire le bruit en l'absence de transmission de données, est d'une intensité inférieure à un certain seuil, la phase de réglage peut avantageusement utiliser un bruit "artificiel", c'est-à-dire un signal de réglage généré spécialement par le dispositif émetteur-récepteur. Un avantage de cet aspect est que ce signal de réglage est généré exprès avec une valeur de tension prédéterminée, donc connue, et il n'est donc pas nécessaire de la mesurer. Un autre avantage est qu'il est possible d'effectuer la phase de réglage dans plusieurs bandes spectrales différentes, et ainsi calculer plusieurs rapports de conversion, chacun étant adapté à un spectre bien précis. L'annulation de bruit qui résulte de l'utilisation de ces différents rapports de conversion est plus précise.

Selon un aspect de l'invention, le signal de réglage connu est émis vers le circuit de mode différentiel.

La tension de ce signal de réglage connu correspond alors à la première valeur de tension, c'est-à-dire la tension de mode différentiel. Le signal de réglage est aussi émis sur la ligne bifilaire qui est dans l'alignement du circuit de mode différentiel.

Selon un aspect de l'invention, le signal de réglage connu est émis vers le circuit de mode commun.

La tension de ce signal de réglage connu correspond alors à la deuxième valeur de tension, c'est-à-dire la tension image du mode commun. Le signal de réglage n'est pas émis sur la ligne bifilaire qui n'est pas dans l'alignement du circuit de mode commun, ce qui est avantageux lorsque le signal de réglage risque de perturber la ligne bifilaire ou des équipements connectés à son extrémité distante.

De plus, cette méthode permet de réaliser la phase de réglage à toutes les fréquences nécessaires, quel que soit le niveau du bruit ambiant, aussi appelé bruit de mode commun, présent sur la ligne bifilaire. Son inconvénient est qu'elle nécessite un canal d'émission de signal vers le circuit de mode commun, ce qui n'est pas nécessaire si le signal de réglage est émis vers le circuit de mode différentiel.

Selon un aspect de l'invention, la première valeur est obtenue par mesure au niveau des deux fils d'un des côtés du circuit de mode différentiel, et où la deuxième valeur est obtenue par mesure au niveau des deux fils d'un des côtés du circuit de mode commun.

Lorsque le bruit ambiant, aussi appelé bruit de mode commun, présent dans la ligne bifilaire est d'une intensité suffisante, la phase de réglage peut avantageusement l'utiliser et en mesurer la tension dans le circuit de mode commun et également mesurer la tension résultante dans le circuit de mode différentiel. Il n'est pas nécessaire que le dispositif émetteur-récepteur soit capable de générer un signal de réglage spécial, et le dispositif s'en trouve simplifié.

Les différents aspects du procédé d'annulation de bruit qui viennent d'être décrits peuvent être mis en œuvre indépendamment les uns des autres ou en combinaison les uns avec les autres.

L'invention concerne aussi un dispositif émetteur-récepteur apte à émettre et recevoir un signal électrique sur une ligne bifilaire, comprenant :
- un premier transformateur, dit circuit de mode différentiel, comprenant un côté primaire et un côté secondaire, le côté primaire étant connecté par deux fils à la ligne bifilaire ;
- un deuxième transformateur, dit circuit de mode commun, comprenant un côté primaire et un côté secondaire, le côté primaire étant connecté par un fil au côté primaire du circuit de mode différentiel, et à une masse par un autre fil ;
et comprenant en outre les modules suivants :
- module d'obtention d'une valeur de tension sur la ligne bifilaire, dite tension de mode différentiel ;
- module de mesure d'une valeur de tension correspondant à une tension au niveau des deux fils du côté secondaire du circuit de mode commun, dite tension image du mode commun, résultant de ladite tension de mode différentiel ;
- module de calcul du rapport entre la deuxième valeur et la première valeur, dit rapport de conversion du bruit ;
- module de réception d'un signal de données en provenance de la ligne bifilaire ;
- module d'annulation du bruit dans le signal de données, par soustraction d'une estimation du bruit, l'estimation étant calculée par division d'une valeur de tension image du mode commun par ledit rapport de conversion.

Le dispositif émetteur-récepteur selon l'invention est apte à mettre en œuvre le procédé décrit plus haut, dans tous ses modes de réalisation. En particulier, le circuit de mode commun ne modifie pas la tension de mode différentiel obtenue au niveau du côté secondaire du premier transformateur et permet la mesure de la tension image du mode commun. Ce dispositif est destiné à être mis en œuvre par exemple dans un modem xDSL.

Selon un aspect de l'invention, le côté primaire du circuit de mode commun est connecté par le fil au point milieu du côté primaire du circuit de mode différentiel.

Comme la plupart des transformateurs prévoient la possibilité d'une connexion électrique en leur point milieu, du côté primaire et du côté secondaire, aucun composant électronique additionnel n'est nécessaire pour connecter le circuit de mode commun au circuit de mode différentiel.

Selon un aspect de l'invention, le côté primaire du circuit de mode commun est connecté par le fil à un pont de résistances à hautes impédances, le pont étant connecté à chacun des deux fils du côté primaire du circuit de mode différentiel.

Cet aspect est une alternative lorsqu'une connexion au point milieu du circuit de mode différentiel n'est pas possible.

Selon un aspect de l'invention, le côté primaire du circuit de mode commun est connecté par le fil à une sonde de courant positionnée autour des deux fils du côté primaire du circuit de mode différentiel.

Cet aspect est une autre alternative lorsqu'une connexion au point milieu du circuit de mode différentiel n'est pas possible.

L'invention concerne aussi un programme d'ordinateur comprenant des instructions pour la mise en œuvre des étapes du procédé d'annulation de bruit qui vient d'être décrit, lorsque ce programme est exécuté par un processeur.

L'invention concerne enfin un support d'enregistrement, lisible par un dispositif émetteur-récepteur d'un signal électrique tel que par exemple un modem xDSL, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un exemple de dispositif émetteur-récepteur mettant en œuvre le procédé d'annulation d'un bruit présent dans un signal de données reçu sur une ligne bifilaire, selon l'invention,
- les figures 2a, 2b et 2c présentent un exemple de mise en œuvre du circuit de mode différentiel compris dans le dispositif émetteur-récepteur, selon un premier, un deuxième et un troisième mode de réalisation de la connexion entre le circuit de mode commun et le circuit de mode différentiel, selon l'invention,
- la figure 3 présente de façon schématique un exemple de mise en œuvre des étapes du procédé d'annulation d'un bruit présent dans un signal de données reçu sur une ligne bifilaire électrique, selon un aspect de l'invention.
- la figure 4 présente un exemple de structure du dispositif émetteur-récepteur, selon un aspect de l'invention.

### 5. Description détaillée d'au moins un mode de réalisation de l'invention

Dans la suite de la description, on présente des exemples de plusieurs modes de réalisation de l'invention se basant sur un système de transmission bifilaire DSL, mais l'invention s'applique également à d'autres systèmes, tel qu'un système PLT.

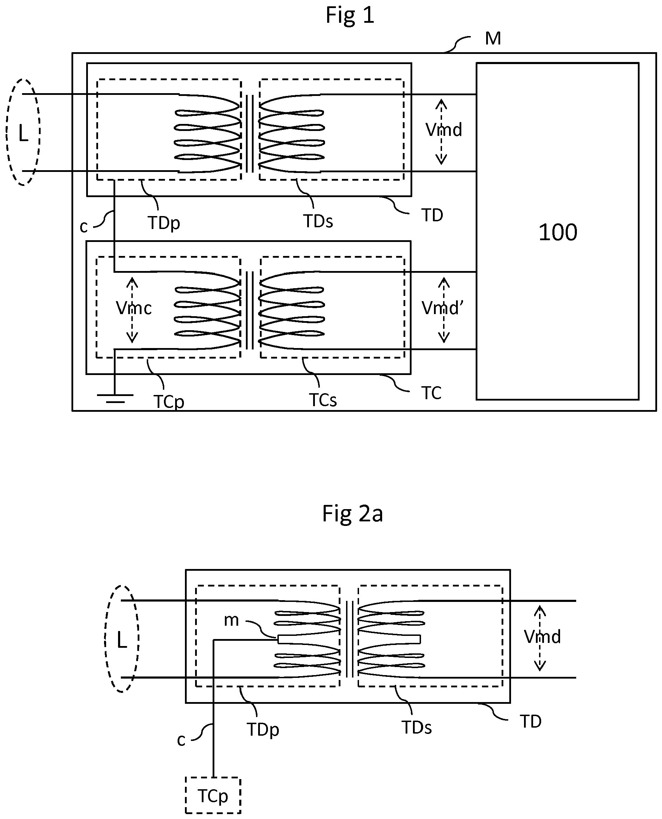

La **figure 1** présente de façon schématique un exemple de dispositif émetteur-récepteur mettant en œuvre le procédé d'annulation d'un bruit présent dans un signal de données reçu sur une ligne bifilaire, selon l'invention.

Le dispositif M, qui peut être un modem, comprend un premier transformateur de courant TD, et un deuxième transformateur de courant TC. Chacun de ces transformateurs est relié à une unité de traitement 100, aussi appelée "chipset", également comprise dans le modem M.

Comme tout transformateur, le premier transformateur TD comprend un côté primaire TDp et un côté secondaire TDs, isolés galvaniquement entre eux. Cette isolation permet de protéger le côté secondaire TDs, relié au chipset 100, de toute surtension affectant le côté primaire TDp, en particulier au travers de la ligne bifilaire L à laquelle est relié à le côté primaire TDp du premier transformateur TD.

De même, le second transformateur TC comprend un côté primaire TCp et un côté secondaire TCs, isolés galvaniquement entre eux afin de protéger le côté secondaire TCs, également relié au chipset 100, de toute surtension pouvant affecter le côté primaire TCp, au travers du côté primaire TDp du premier transformateur TD, auquel est relié le côté primaire TCp du second transformateur TC, par la connexion c.

Lorsqu'une tension existe entre les deux fils du côté primaire d'un transformateur, une tension proportionnelle est induite entre les deux fils du côté secondaire, et vice versa.

Ainsi, lorsqu'une différence de tension existe entre les deux fils de la ligne bifilaire L, une tension Vmd, dite tension de mode différentiel, est induite entre les deux fils du côté secondaire TDs du premier transformateur TD. C'est pourquoi le premier transformateur TD est aussi appelé "circuit de mode différentiel".

Grâce à la connexion c entre le second transformateur TC et le premier transformateur TD, lorsqu'une tension Vmc, dite tension de mode commun, existe entre la masse et le premier transformateur TD, cela se traduit par une tension Vmd' au niveau du côté secondaire TCs du second transformateur TC. C'est pourquoi le second transformateur TC est aussi appelé "circuit de mode commun".

On comprend que grâce à la disposition, dans le modem M, du circuit de mode différentiel TD, du circuit de mode commun TC et du chipset 100, les tensions Vmd et Vmd' peuvent être mesurées à tout moment par le chipset 100.

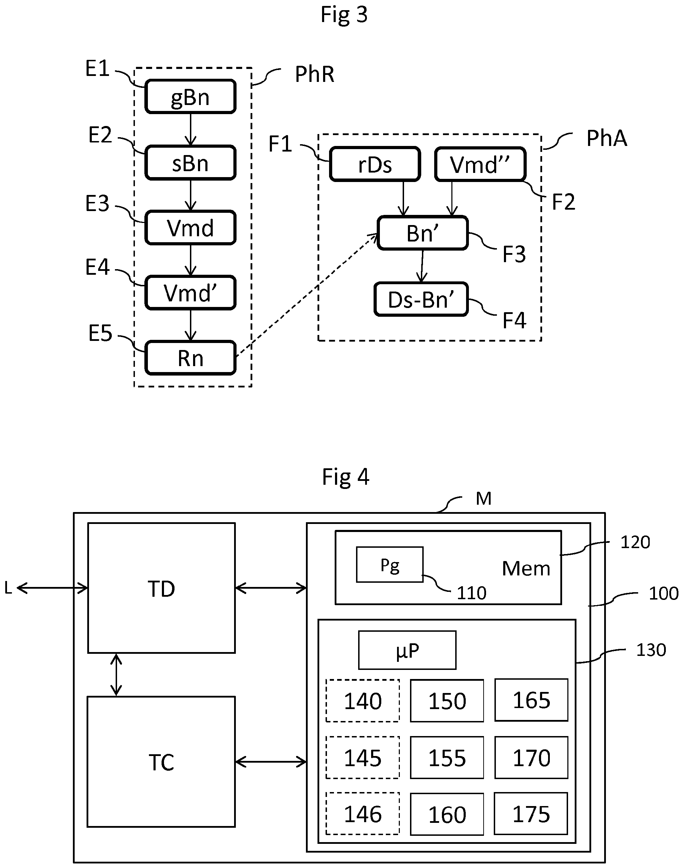

Afin que le modem M puisse recevoir et émettre des signaux sur la ligne bifilaire L, le chipset 100 comprend un module de réception et un module d'émission, connectés au circuit de mode différentiel TD. Afin de pouvoir mesurer un bruit en mode commun, le chipset comprend également un module de réception connecté au circuit de mode commun TC. Le chipset 100 comprend également d'autres modules qui seront décrits en relation avec la figure 4.

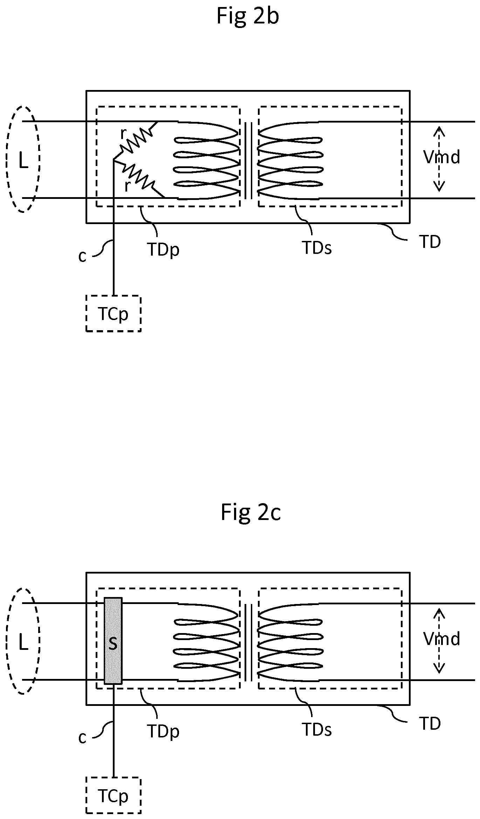

Les **figures 2a****,** **2b et 2c** présentent un exemple de mise en œuvre du circuit de mode différentiel compris dans le dispositif émetteur-récepteur, selon un premier, un deuxième et un troisième mode de réalisation de la connexion entre le circuit de mode commun et le circuit de mode différentiel, selon l'invention.

Tel qu'illustré par la **figure 2a****,** dans le premier mode de réalisation, le côté primaire TCp du circuit de mode commun TC est connecté par le fil c, c'est-à-dire le fil qui n'est pas connecté à la masse, au point milieu du côté primaire TDp du circuit de mode différentiel TD.

L'avantage de ce mode est qu'aucun composant électronique additionnel n'est nécessaire pour connecter le circuit de mode commun au circuit de mode différentiel. Une simple connexion électrique suffit.

Tel qu'illustré par la **figure 2b****,** dans le deuxième mode de réalisation, le côté primaire TCp du circuit de mode commun TC est connecté par le fil c à un pont de résistances à hautes impédances, chaque résistance r étant par exemple de l'ordre de 10 kOhms, le pont étant connecté à chacun des deux fils du côté primaire TDp du circuit de mode différentiel TD.

Ceci est une alternative lorsqu'il n'est pas possible de connecter le point milieu du côté primaire TDp du circuit de mode différentiel TD.

Tel qu'illustré par la **figure 2c****,** dans le troisième mode de réalisation, le côté primaire TCp du circuit de mode commun TC est connecté par le fil c à une sonde de courant s, positionnée autour des deux fils du côté primaire TDp du circuit de mode différentiel TD.

Ceci est une autre alternative lorsqu'il n'est pas possible de connecter le point milieu du côté primaire TDp du circuit de mode différentiel TD.

La **figure 3** présente de façon schématique un exemple de mise en œuvre des étapes du procédé d'annulation d'un bruit présent dans un signal de données reçu sur une ligne bifilaire électrique, selon un aspect de l'invention.

Le procédé comprend deux phases séparées temporellement: une phase de réglage PhR, pendant laquelle est calculé un rapport de conversion, et une phase d'annulation de bruit PhA proprement dite, utilisant le rapport de conversion calculé pour estimer le bruit à soustraire d'un signal de données reçu.

La **phase de réglage PhR** peut être exécutée selon plusieurs modes de réalisation.

Dans un **premier mode de réalisation du procédé** d'annulation de bruit selon l'invention, la phase de réglage PhR comprend les étapes E1 à E5.

Lors d'une étape E1, le chipset 100 du modem génère un signal de réglage Bn avec une énergie et dans une bande de fréquence qui sont connues.

Lors d'une étape E2, le signal de réglage Bn connu est émis depuis le chipset 100 vers le circuit de mode différentiel TD, et donc vers la ligne bifilaire L. Ce signal de réglage ne doit donc pas présenter, pour la ligne bifilaire L et les équipements qui lui sont connectés à l'extrémité distance, de perturbation qui pourrait gêner la fourniture de services à des utilisateurs.

Lors d'une étape E3, une valeur de tension sur la ligne bifilaire, dite tension de mode différentiel Vmd, est obtenue, par simple connaissance du signal de réglage Bn par le chipset 100 qui l'a émis. Alternativement, la valeur peut être obtenue par mesure de cette tension entre les deux fils du côté secondaire TDs du circuit de mode différentiel TD. La continuité électrique de ces fils se prolongeant jusque dans le chipset 100, la mesure peut également être effectuée au niveau du chipset 100.

De cette tension de mode différentiel Vmd résulte une tension au niveau des deux fils du côté secondaire TCs du circuit de mode commun TC, dite tension image du mode commun Vmd'.

Lors d'une étape E4, la valeur de la tension image du mode commun Vmd' est obtenue. La continuité électrique des fils du côté secondaire TCs se prolongeant jusque dans le chipset 100, cette obtention peut être réalisée par la mesure de la tension entre ces fils au niveau du chipset 100.

Lors d'une étape E5, le rapport est calculé entre la deuxième valeur, c'est-à-dire la tension image de mode commun Vmd', et la première valeur, c'est-à-dire la tension de mode différentiel Vmd. Ce rapport est dit rapport de conversion du bruit Rn.

Dans un **deuxième mode de réalisation du procédé** d'annulation de bruit selon l'invention, les étapes E1 et E2 ne sont pas exécutées. Si un bruit ambiant Ba existe naturellement sur la ligne bifilaire L, il peut être suffisamment énergique pour rendre inutile, voire impossible, la génération d'un signal de réglage Bn par le chipset, dans les bandes de fréquence utilisées. Dans ce cas la valeur de la tension de mode différentiel Vmd de l'étape E3 est obtenue par mesure de la tension entre les deux fils du côté secondaire TDs du circuit de mode différentiel TD. Les étapes E4 et E5 sont exécutées de façon identique au premier mode de réalisation du procédé. L'énergie du bruit ambiant Ba peut être mesurée périodiquement par le chipset qui décide l'exécution ou non des étapes E1 et E2 en fonction d'un dépassement de seuil.

Il est possible et avantageux, dans certains cas, de combiner le premier avec le deuxième mode de réalisation du procédé d'annulation de bruit. En effet, les caractéristiques du bruit ambiant sont aléatoires et le bruit ambiant ne présente pas forcément de l'énergie suffisante dans toutes les bandes de fréquences utilisées, pour lesquelles le rapport de conversion du bruit Rn ne pourra donc pas être estimé avec fiabilité. L'exécution du procédé selon le premier mode avec un signal de réglage Bn dans ces bandes de fréquences, en complément du deuxième mode utilisant le bruit ambiant Ba, peut alors pallier à cette lacune.

Dans un **troisième mode de réalisation du procédé** d'annulation de bruit selon l'invention, le signal de réglage Bn est émis depuis le chipset 100 vers le circuit de mode commun TC, et non vers le circuit de mode différentiel TD. Cela peut être avantageux s'il faut éviter que le signal de réglage Bn soit émis sur la ligne bifilaire L, ou lorsque le bruit ambiant Ba déjà présent sur la ligne est inutilisable par le deuxième mode de réalisation du procédé, par exemple parce qu'il est trop aléatoire.

Ce troisième mode nécessite que le chipset 100 comprenne un module d'émission, connecté au circuit de mode commun TC, en plus du module de réception déjà mentionné, afin que le signal de réglage Bn puisse être émis du chipset 100 vers le circuit de mode commun TC.

Dans cette variante les étapes E2, E3 et E4 sont remplacées respectivement par des étapes E2', E3' et E4'.

Lors de l'étape E2', le signal de réglage Bn est émis depuis le chipset 100 vers le circuit de mode commun TC.

De ce signal de réglage Bn résulte une tension au niveau des deux fils du côté secondaire TDs du circuit de mode différentiel TD, dite tension de mode différentiel Vmd.

Lors d'une étape E3', une valeur de tension sur la ligne bifilaire, dite tension de mode différentiel Vmd, est obtenue, par mesure de cette tension entre les deux fils du côté secondaire TDs du circuit de mode différentiel TD. La continuité électrique de ces fils se prolongeant jusque dans le chipset 100, la mesure peut également être effectuée au niveau du chipset 100.

Lors d'une étape E4', la valeur de la tension image du mode commun Vmd' est obtenue, par simple connaissance du signal de réglage Bn par le chipset 100 qui l'a émis. Alternativement, la valeur peut être obtenue par mesure de cette tension entre les deux fils du côté secondaire TCs du circuit de mode différentiel TC. La continuité électrique des fils du côté secondaire TCs se prolongeant jusque dans le chipset 100, cette mesure peut être réalisée au niveau du chipset 100.

Dans le premier et le deuxième mode de réalisation décrits ci-dessus, l'ensemble des étapes est répété itérativement autant de fois qu'il y a de bandes fréquentielles utilisées dans les signaux de données transmis sur la ligne L. A chaque bande fréquentielle correspond un signal de réglage Bn, et un rapport de conversion du bruit Rn, avec n variant de 1 au nombre de bandes fréquentielles.

La **phase d'annulation de bruit PhA** comprend les étapes F1 à F4, et utilise les mêmes bandes fréquentielles de signal de réglage Bn et les mêmes rapports de conversion de bruit Rn que la phase de réglage précédant immédiatement la phase d'annulation de bruit.

Lors d'une étape F1, un signal de données est reçu par le modem M en provenance de la ligne bifilaire L. Ce signal passe au travers du circuit de mode différentiel TD pour arriver dans le chipset 100.

Lors d'une étape F2 qui est simultanée à l'étape F1, une valeur de la tension image de mode commun Vmd" est obtenue par mesure de cette tension entre les deux fils du côté secondaire TCs du circuit de mode commun TC. La continuité électrique de ces fils se prolongeant jusque dans le chipset 100, la mesure peut également être effectuée au niveau du chipset 100.

Lors d'une étape F3, un bruit Bn' est estimé en divisant la tension Vmd" par le rapport de conversion Rn.

Enfin, lors d'une étape F4, le bruit dans le signal de données reçu est annulé par soustraction du bruit Bn' estimé.

On comprend que le bon fonctionnement de la phase d'annulation de bruit, c'est-à-dire l'absence de bruit dans le signal de données reçu après exécution du procédé, dépend de la qualité du rapport de conversion Rn calculé durant la phase de réglage. La phase de réglage doit donc être répétée si les conditions d'environnement électromagnétique de la ligne changent, et surtout si la ligne devient instable, c'est-à-dire si des erreurs de transmission ou des pertes de synchronisation se produisent, ou si aucun signal de données n'est reçu pendant une période anormalement longue. La façon de détecter ces phénomènes est connue.

En relation avec la **figure 4****,** on présente maintenant un exemple de structure du dispositif émetteur-récepteur, selon un aspect de l'invention.

Le dispositif émetteur-récepteur M, ou modem M, met en œuvre le procédé d'annulation de bruit, dont différents modes de réalisation viennent d'être décrits. Un tel modem M peut être par exemple être un modem xDSL fonctionnant pour un système de transmission bifilaire utilisant tout type de technique DSL (ADSL, VDSL, etc.).

La figure 1 a déjà montré que le modem M comprend un circuit de mode différentiel TD, un circuit de mode commun TC, et une unité de traitement 100, ou chipset 100, ainsi que la façon dont ces composants peuvent être connectés entre eux à l'intérieur du modem M.

Par exemple, le chipset 100 comprend une unité de traitement 130, équipée par exemple d'un microprocesseur µP, et pilotée par un programme d'ordinateur 110, stocké dans une mémoire 120 et mettant en œuvre le procédé d'annulation de bruit selon l'invention. A l'initialisation, les instructions de code du programme d'ordinateur 110 sont par exemple chargées dans une mémoire RAM, avant d'être exécutées par le processeur de l'unité de traitement 130.

Un tel chipset 100 comprend :
- un module 150 d'obtention, apte à obtenir une valeur de tension sur la ligne bifilaire L, correspondant à une tension au niveau des deux fils du côté secondaire TDs du circuit de mode différentiel TD, dite tension de mode différentiel Vmd;
- un module 155 d'obtention, apte à obtenir une valeur de tension correspondant à une tension au niveau des deux fils du côté secondaire TCs du circuit de mode commun TC, dite tension image du mode commun, Vmd' ou Vmd" ;
- un module 160 de calcul, apte à calculer un rapport entre la valeur de la tension image de mode commun Vmd', et la valeur de la tension de mode différentiel Vmd, ce rapport étant dit rapport de conversion Rn ;
- un module 165 de réception, apte à recevoir un signal de données en provenance de la ligne bifilaire L, au travers du circuit de mode différentiel TD ;
- un module 170 d'estimation de bruit, apte à estimer un bruit Bn' en calculant une division d'une valeur de la tension image de mode commun Vmd" par le rapport de conversion Rn ;
- module 175 d'annulation de bruit, apte à annuler le bruit dans le signal de données en lui soustrayant l'estimation du bruit Bn'.

Avantageusement, le chipset 100 peut aussi comprendre:
- un module 140 de génération de signal, apte à générer un signal de réglage Bn de caractéristiques prédéterminées et connues ;
- un module 145 d'émission du signal de réglage, apte à émettre le signal de réglage Bn vers le circuit de mode différentiel TD ;
- un module 146 d'émission du signal de réglage, apte à émettre le signal de réglage Bn vers le circuit de mode commun TD.

Les modules décrits en relation avec la figure 4 peuvent être des modules matériels ou logiciels.

Les exemples de réalisation de l'invention qui viennent d'être présentés ne sont que quelques-uns des modes de réalisation envisageables.

## Revendications

1. **Procédé de mesure** de tensions représentatives d'une perturbation sur une ligne bifilaire électrique (L) connectée à un modem de communication (100) apte à recevoir par ladite ligne un signal de données selon une technologie de transmission particulière, le procédé étant mis en œuvre par un dispositif de mesure situé en coupure entre la ligne bifilaire et le modem, le dispositif de mesure comprenant :
• un premier transformateur (TD), dit circuit de mode différentiel, comprenant un côté primaire (TDp) connecté à la ligne bifilaire et un côté secondaire (TDs) connecté au modem, une tension (Vmd) du circuit de mode différentiel, dite tension de bruit de mode différentiel, existant sur une pluralité de bandes de fréquences préalablement à la transmission d'un signal de données sur la ligne bifilaire ;
• un deuxième transformateur (TC), dit circuit de mode commun, comprenant un côté primaire (TCp) connecté par un fil (c) au côté primaire (TDp) du circuit de mode différentiel, et à une masse par un autre fil, et un côté secondaire (TCs) connecté au modem, une tension (Vmd') du circuit de mode commun, dite tension de bruit de mode commun, existant sur la pluralité de bandes de fréquences préalablement à la transmission d'un signal de données sur la ligne bifilaire ;
le procédé comprenant les étapes suivantes :
• mesure (E3, E4), pour au moins une bande de fréquences de la pluralité de bandes de fréquences utilisées par la technologie de transmission, d'au moins une tension de bruit de mode commun (Vmd') et d'au moins une tension de bruit de mode différentiel (Vmd), une mesure produisant une valeur de tension correspondante;
• émission des valeurs de tension, à destination d'un calculateur apte à fournir une estimation de bruit relative à une perturbation sur la ligne bifilaire en fonction de valeurs de tension.

2. **Procédé de fourniture d'une estimation de bruit relative** à une perturbation sur une ligne bifilaire électrique (L) connectée à un modem de communication (100) apte à recevoir par ladite ligne un signal de données selon une technologie de transmission particulière, le procédé comprenant les étapes suivantes:
• réception d'un groupe de valeurs de tension obtenues sur des transformateurs (TD, TC) connectés à la ligne bifilaire, le groupe comprenant, pour au moins une bande de fréquences, une valeur de tension de bruit de mode commun (Vmd') et une valeur de tension de bruit de mode différentiel (Vmd), les valeurs ayant été mesurées préalablement à la transmission d'un signal de données sur la ligne bifilaire ;
• application d'au moins un calcul aux valeurs de tension reçues ;
• fourniture d'une estimation de bruit relative à la perturbation, en fonction du résultat de l'au moins un calcul.

3. **Dispositif de mesure** de tensions représentatives d'une perturbation sur une ligne bifilaire électrique (L) connectée à un modem de communication (100) apte à recevoir par ladite ligne un signal de données selon une technologie de transmission particulière, le dispositif de mesure étant situé en coupure entre la ligne bifilaire et le modem, et comprenant :
• un premier transformateur (TD), dit circuit de mode différentiel, comprenant un côté primaire (TDp) connecté à la ligne bifilaire et un côté secondaire (TDs) connecté au modem, une tension (Vmd) du circuit de mode différentiel, dite tension de bruit de mode différentiel, existant sur une pluralité de bandes de fréquences préalablement à la transmission d'un signal de données sur la ligne bifilaire ;
• un deuxième transformateur (TC), dit circuit de mode commun, comprenant un côté primaire (TCp) connecté par un fil (c) au côté primaire (TDp) du circuit de mode différentiel, et à une masse par un autre fil, et un côté secondaire (TCs) connecté au modem, une tension (Vmd') du circuit de mode commun, dite tension de bruit de mode commun, existant sur la pluralité de bandes de fréquences préalablement à la transmission d'un signal de données sur la ligne bifilaire ;
• un module (150, 155) de mesure, pour au moins une bande de fréquences de la pluralité de bandes de fréquences utilisées par la technologie de transmission, d'une tension de bruit de mode commun (Vmd') et d'une tension de bruit de mode différentiel (Vmd), une mesure produisant une valeur de tension correspondante ;
• un module d'émission des valeurs de tension à destination d'un calculateur apte à fournir une estimation de bruit relative à une perturbation sur la ligne bifilaire en fonction de valeurs de tension.

4. **Calculateur apte à fournir une estimation de bruit relative** à une perturbation sur une ligne bifilaire électrique (L) connectée à un modem de communication (100) apte à recevoir par ladite ligne un signal de données selon une technologie de transmission particulière, le calculateur comprenant :
• un module de réception d'un groupe de valeurs de tension obtenues sur des transformateurs connectés à la ligne bifilaire, le groupe comprenant, pour au moins une bande de fréquences, une valeur de tension de bruit de mode commun (Vmd') et une valeur de tension de bruit de mode différentiel (Vmd), les valeurs ayant été mesurées préalablement à la transmission d'un signal de données sur la ligne bifilaire ;
• un module (160) de calcul appliqué aux valeurs de tension reçues ;
• un module (170) de fourniture d'une estimation de bruit relative à la perturbation, en fonction du résultat de l'au moins un calcul.

5. **Calculateur** selon la revendication 4, où le module de calcul (160) est apte à calculer un rapport entre une valeur de tension de bruit de mode commun (Vmd'), et une valeur de tension de bruit de mode différentiel (Vmd), pour au moins une bande de fréquences.

6. **Programme d'ordinateur, caractérisé en ce qu'**il comprend des instructions pour la mise en œuvre des étapes du procédé de mesure de tension et/ou du procédé de fourniture d'une estimation de bruit selon respectivement la revendication 1 et/ou la revendication 2, lorsque ce programme est exécuté par un processeur.

7. **Support d'enregistrement** lisible par un dispositif de mesure ou un calculateur, sur lequel est enregistré le programme selon la revendication 6.

## Patentansprüche

1. Verfahren zur Messung von Spannungen, die für eine Störung in einer Zweidrahtstromleitung (L) repräsentativ sind, die mit einem Kommunikationsmodem (100) verbunden ist, das geeignet ist, über die Leitung ein Datensignal gemäß einer besonderen Übertragungstechnologie zu empfangen, wobei das Verfahren von einer Messvorrichtung ausgeführt wird, die unterbrechend zwischen der Zweidrahtleitung und dem Modem angeordnet ist, wobei die Messvorrichtung umfasst:
• einen ersten Transformator (TD), Gegentaktschaltung genannt, der eine mit der Zweidrahtleitung verbundene Primärseite (TDp) und eine mit dem Modem verbundene Sekundärseite (TDs) umfasst, wobei eine Spannung (Vmd) der Gegentaktschaltung, Gegentaktrauschspannung genannt, über eine Mehrzahl von Frequenzbändern vor der Übertragung eines Datensignals über die Zweidrahtleitung vorliegt;
• einen zweiten Transformator (TC), Gleichtaktschaltung genannt, der eine Primärseite (TCp), die über einen Draht (c) mit der Primärseite (TDp) der Gegentaktschaltung und über einen anderen Draht mit einer Masse verbunden ist, und eine Sekundärseite (TCs), die mit dem Modem verbunden ist, umfasst, wobei eine Spannung (Vmd') der Gleichtaktschaltung, Gleichtaktrauschspannung genannt, über die Mehrzahl von Frequenzbändern vor der Übertragung eines Datensignals über die Zweidrahtleitung vorliegt;
wobei das Verfahren die folgenden Schritte umfasst:
• Messen (E3, E4), für mindestens ein Frequenzband der Mehrzahl von Frequenzbändern, die von der Übertragungstechnologie genutzt werden, mindestens einer Gleichtaktrauschspannung (Vmd') und mindestens einer Gegentaktrauschspannung (Vmd), wobei eine Messung einen entsprechenden Spannungswert ergibt;
• Senden der Spannungswerte an einen Rechner, der geeignet ist, in Abhängigkeit von Spannungswerten eine Rauschschätzung bezüglich einer Störung in der Zweidrahtleitung abzugeben.

2. Verfahren zum Abgeben einer Rauschschätzung bezüglich einer Störung in einer Zweidrahtstromleitung (L), die mit einem Kommunikationsmodem (100) verbunden ist, das geeignet ist, über die Leitung ein Datensignal gemäß einer besonderen Übertragungstechnologie zu empfangen, wobei das Verfahren die folgenden Schritte umfasst:
• Empfangen einer Gruppe von Spannungswerten, die über mit der Zweidrahtleitung verbundene Transformatoren (TD, TC) erhalten werden, wobei die Gruppe für mindestens ein Frequenzband einen Gleichtaktrauschspannungswert (Vmd') und einen Gegentaktrauschspannungswert (Vmd) umfasst, wobei die Werte vor der Übertragung eines Datensignals über die Zweidrahtleitung gemessen worden sind;
• Anwenden mindestens einer Berechnung auf die empfangenen Spannungswerte;
• Abgeben einer Rauschschätzung bezüglich der Störung in Abhängigkeit von dem Ergebnis der mindestens einen Berechnung.

3. Vorrichtung zur Messung von Spannungen, die für eine Störung in einer Zweidrahtstromleitung (L) repräsentativ sind, die mit einem Kommunikationsmodem (100) verbunden ist, das geeignet ist, über die Leitung ein Datensignal gemäß einer besonderen Übertragungstechnologie zu empfangen, wobei die Messvorrichtung unterbrechend zwischen der Zweidrahtleitung und dem Modem angeordnet ist und umfasst:
• einen ersten Transformator (TD), Gegentaktschaltung genannt, der eine mit der Zweidrahtleitung verbundene Primärseite (TDp) und eine mit dem Modem verbundene Sekundärseite (TDs) umfasst, wobei eine Spannung (Vmd) der Gegentaktschaltung, Gegentaktrauschspannung genannt, über eine Mehrzahl von Frequenzbändern vor der Übertragung eines Datensignals über die Zweidrahtleitung vorliegt;
• einen zweiten Transformator (TC), Gleichtaktschaltung genannt, der eine Primärseite (TCp), die über einen Draht (c) mit der Primärseite (TDp) der Gegentaktschaltung und über einen anderen Draht mit einer Masse verbunden ist, und eine Sekundärseite (TCs), die mit dem Modem verbunden ist, umfasst, wobei eine Spannung (Vmd') der Gleichtaktschaltung, Gleichtaktrauschspannung genannt, über die Mehrzahl von Frequenzbändern vor der Übertragung eines Datensignals über die Zweidrahtleitung vorliegt;
• ein Messmodul (150, 155) zum Messen, für mindestens ein Frequenzband der Mehrzahl von Frequenzbändern, die von der Übertragungstechnik genutzt werden, einer Gleichtaktrauschspannung (Vmd') und einer Gegentaktrauschspannung (Vmd), wobei eine Messung einen entsprechenden Spannungswert ergibt;
• ein Sendemodul zum Senden der Spannungswerte an einen Rechner, der geeignet ist, in Abhängigkeit von Spannungswerten eine Rauschschätzung bezüglich einer Störung in einer Zweidrahtleitung abzugeben.

4. Rechner, der geeignet ist, eine Rauschschätzung bezüglich einer Störung in einer Zweidrahtstromleitung (L) abzugeben, die mit einem Kommunikationsmodem (100) verbunden ist, das geeignet ist, über die Leitung ein Datensignal gemäß einer besonderen Übertragungstechnologie zu empfangen, wobei der Rechner umfasst:
• ein Empfangsmodul zum Empfangen einer Gruppe von Spannungswerten, die über mit der Zweidrahtleitung verbundene Transformatoren erhalten werden, wobei die Gruppe für mindestens ein Frequenzband einen Gleichtaktrauschspannungswert (Vmd') und einen Gegentaktrauschspannungswert (Vmd) umfasst, wobei die Werte vor der Übertragung eines Datensignals über die Zweidrahtleitung gemessen worden sind;
• ein Rechenmodul (160) zur Berechnung, die auf die empfangenen Spannungswerte angewandt wird;
• ein Modul (170) zum Abgeben einer Rauschschätzung bezüglich der Störung in Abhängigkeit von dem Ergebnis der mindestens einen Berechnung.

5. Rechner nach Anspruch 4, wobei das Rechenmodul (160) geeignet ist, ein Verhältnis zwischen einem Gleichtaktrauschspannungswert (Vmd') und einem Gegentaktrauschspannungswert (Vmd) für mindestens ein Frequenzband zu berechnen.

6. Computerprogramm, **dadurch gekennzeichnet, dass** es Befehle umfasst, die bei der Ausführung des Programms durch einen Prozessor die Schritte des Verfahrens zur Spannungsmessung und/oder des Verfahrens zum Abgeben einer Rauschschätzung nach Anspruch 1 und/oder Anspruch 2 ausführen.

7. Speichermedium, das von einer Messvorrichtung oder einem Rechner gelesen werden kann und auf dem das Programm nach Anspruch 6 gespeichert ist.

## Claims

1. Method for measuring voltages that are representative of interference on a two-wire electrical line (L) that is connected to a communication modem (100), which is able to receive a data signal over said line using a specific transmission technology, the method being implemented by a measuring device located in series between the two-wire line and the modem, the measuring device comprising:
• a first transformer (TD), known as a differential-mode circuit, which comprises a primary side (TDp), which is connected to the two-wire line, and a secondary side (TDs), which is connected to the modem, a voltage (Vmd) of the differential-mode circuit, known as a differential-mode noise voltage, being present in a plurality of frequency bands prior to the transmission of a data signal over the two-wire line;
• a second transformer (TC), known as a common-mode circuit, which comprises a primary side (TCp), which is connected to the primary side (TDp) of the differential-mode circuit by means of a wire (c) and to an earth by means of another wire, and a secondary side (TCs), which is connected to the modem, a voltage (Vmd') of the common-mode circuit, known as a common-mode noise voltage, being present in the plurality of frequency bands prior to the transmission of a data signal over the two-wire line;
the method comprising the following steps:
• measuring (E3, E4), for at least one frequency band of the plurality of frequency bands used by the transmission technology, at least one common-mode noise voltage (Vmd') and at least one differential-mode noise voltage (Vmd), a measurement producing a corresponding voltage value;
• sending the voltage values to a computer that is able to provide a noise estimate that relates to interference on the two-wire line on the basis of voltage values.

2. Method for providing a noise estimate that relates to interference on a two-wire electrical line (L) that is connected to a communication modem (100), which is able to receive a data signal over said line using a specific transmission technology, the method comprising the following steps:
• receiving a group of voltage values obtained at transformers (TD, TC) that are connected to the two-wire line, the group comprising, for at least one frequency band, a common-mode noise voltage value (Vmd') and a differential-mode noise voltage value (Vmd), the values having been measured prior to the transmission of a data signal over the two-wire line;
• applying at least one computation to the received voltage values;
• providing a noise estimate that relates to the interference on the basis of the result of the at least one computation.

3. Device for measuring voltages that are representative of interference on a two-wire electrical line (L) that is connected to a communication modem (100), which is able to receive a data signal over said line using a specific transmission technology, the measuring device being located in series between the two-wire line and the modem and comprising:
• a first transformer (TD), known as a differential-mode circuit, which comprises a primary side (TDp), which is connected to the two-wire line, and a secondary side (TDs), which is connected to the modem, a voltage (Vmd) of the differential-mode circuit, known as a differential-mode noise voltage, being present in a plurality of frequency bands prior to the transmission of a data signal over the two-wire line;
• a second transformer (TC), known as a common-mode circuit, which comprises a primary side (TCp), which is connected to the primary side (TDp) of the differential-mode circuit by means of a wire (c) and to an earth by means of another wire, and a secondary side (TCs), which is connected to the modem, a voltage (Vmd') of the common-mode circuit, known as a common-mode noise voltage, being present in the plurality of frequency bands prior to the transmission of a data signal over the two-wire line;
• a module (150, 155) for measuring, for at least one frequency band of the plurality of frequency bands used by the transmission technology, a common-mode noise voltage (Vmd') and a differential-mode noise voltage (Vmd), a measurement producing a corresponding voltage value;
• a module for sending the voltage values to a computer that is able to provide a noise estimate that relates to interference on the two-wire line on the basis of voltage values.

4. Computer that is able to provide a noise estimate that relates to interference on a two-wire electrical line (L) that is connected to a communication modem (100), which is able to receive a data signal over said line using a specific transmission technology, the computer comprising:
• a module for receiving a group of voltage values obtained at transformers that are connected to the two-wire line, the group comprising, for at least one frequency band, a common-mode noise voltage value (Vmd') and a differential-mode noise voltage value (Vmd), the values having been measured prior to the transmission of a data signal over the two-wire line;
• a module (160) for computation applied to the received voltage values;
• a module (170) for providing a noise estimate that relates to the interference on the basis of the result of the at least one computation.

5. Computer according to Claim 4, wherein the computation module (160) is able to compute a ratio of a common-mode noise voltage value (Vmd') to a differential-mode noise voltage value (Vmd) for at least one frequency band.

6. Computer program, **characterized in that** it comprises instructions for implementing the steps of the voltage measurement method and/or of the method for providing a noise estimate according to Claim 1 and/or Claim 2, respectively, when this program is executed by a processor.

7. Recording medium that can be read by a measuring device or a computer and on which the program according to Claim 6 is recorded.
